# EUROPEAN PATENT SPECIFICATION

(11) **EP 0 780 618 B1**
(45) Date of publication and mention of the grant of the patent: **25.08.1999**
(21) Application number: 96830273.7
(22) Date of filing: 10.05.1996
(51) Int. Cl.: F16L 25/00

(54) **A self-locking sleeve joint for single corrugated conduits**
Selbstverriegelnde Steckverbindung für einseitig gewellte Rohre
Joint à manchons autobloquant pour conduits ondulés à monoface

(30) Priority: 20.12.1995 IT RM950272 U
(43) Date of publication of application: 25.06.1997
(73) Proprietor: C.I.S. Sud s.r.l., 00040 Ariccia (Roma) (IT)
(72) Inventor: Montesi, Paolo C.I.S. Sud s.r.l., 00040 Ariccia (Roma) (IT)
(74) Representative: Taliercio, Antonio

(56) References cited:
- US-A- 3 633 947
- US-A- 4 380 348
- US-A- 4 443 031
- US-A- 4 795 197
- US-A- 5 458 380

## Description

This invention broadly relates to joints adapted for corrugated conduits or tubes and more particularly concerns a sleeve joint for single corrugated conduits, buried in the earth and subject to water pressure.

In a more specific aspect, the invention provides an automatic locking mechanism which enables a tight seal to be achieved between the jointed conduits without requiring a specialized equipment to be used.

As it is known to those skilled in the art, the installation of urban networks of coaxial or fiber optics cables is carried out by means of buried guide structures comprising single or multiple conduit networks.

The layout paths of these conduits can also be non-rectilinear: in fact, they are designed so as to reach and to connect any users by means of a service supplying system.

In view of the above, they are made of materials such as high density polyethylene and have a corrugated outer surface: this gives them a long lasting wear resistance and mechanical flexibility properties. The manufacturing factories supply such tube products in various lengths, such as packages or coils.

During the installation works for such conduits, when continuity of the network is to be guaranteed, it is necessary to connect the various sections of the network by means of special joints. Restrained joint elements as well as screw and bolt elements are generally employed.

Sleeve joints are particularly suitable for conduits of small or intermediate sizes. Such joints have two ends adapted for insertion of the end portions of the tubes to be jointed, as well as a mechanism for retaining them in their operation position as a consequence of a pressure exerted on their outer surfaces. Furthermore, the above mentioned sleeve joints enable a water tight seal to be maintained which makes such structures protected in respect of any water leakage, mechanical stresses or electromagnetic type interferences.

US-A-4,443,031 discloses a self-locking sleeve joint adapted for single corrugated conduits as claimed in the preamble of claim 1.

US-A-5,458,380 discloses a self-locking sleeve joint for corrugated conduits comprising a first and second which, upon being coupled to one another, define a cylindrical room in which the corrugated conduits to be joined are positioned by interposition of a cover sheath on the junction seam between the ends of the conduit to be joined, in intermediate position between the external surface thereof and the internal surface of said half-shells.

The invention is defined by the features of claim 1.

According to an embodiment of this invention, said automatic clamping mechanism of the concemed half-shells comprises toothed tongues and complementary toothed notches altematively arranged along the longitudinal edges and mutually snap engageable under a simple manually exerted pressure.

This invention will be now described by way of illustration and not by way of restriction, according to its preferred embodiment, by referring to the sole Figure of the annexed drawings wherein a perspective view of the sleeve joint applied to two corrugated conduit ends, but with a half-shell in removed condition is shown.

The sleeve shaped joint 10 comprises two half-shells 11 and 12 which, upon being coupled to one another, define a closed cylindrical room wherein the free ends of conduits 18, 19 to be joined are arranged.

Said half-shells 11 and 12 are semi-cylindrical and have, approximately at their ends, semi-circular, inwardly protruding, clamping ribs 13 and 14, with trapezoidal cross-section shape, designed so as to be perfectly engaged into a groove of the external corrugation of each corrugated conduit 18, 19.

At their longitudinal edges, said half-shells have an automatic clamping mechanism comprising complementary toothed tongues 16 and toothed notches 17, alternatively arranged and mutually engageable with a snap action by means of a simple manually exerted pressure.

Furthermore, the concerned joint includes a soft resilient sheath 15 designed so as to be placed at the seam between the conduit ends 18 and 19, in intermediate position between their external surface and the internal surface of said half-shells, so as to guarantee a tight seal therebetween upon closing them with one another.

Sheath 15 has in its intermediate portion a circumferential inwardly extending ridge (not shown in the drawings) which is interposed between the facing ends of the conduits to be joined, thereby enhancing the tight seal and self-centering the sheath in the junction area.

Aiming at better illustrating this invention, the operations to be carried out in putting it to practice will now be briefly described.

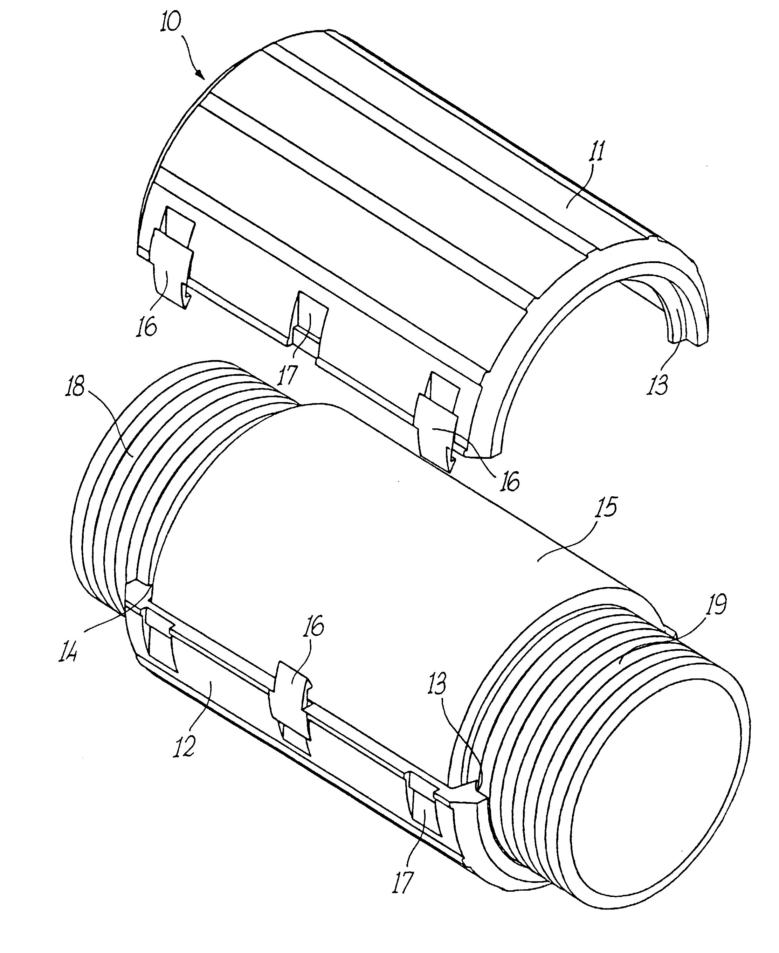

It the first place, it is necessary to cut both sections 18 and 19 of the corrugated conduit along a cross-section line perpendicular to their axis and then to unite their terminal ends and to align them along said axis. In the second place, cover sheath 15 is applied suitably positioned and centered about said conduit sections 18 and 19 and a slight pressure is exerted thereon so as to retain it in perfect adherence relationship to their external surfaces. In the third place, half-shell 12 is positioned so as to completely retain said cover sheath 15 over its whole length thereinto, such as it is shown in Figure 1.

During this operation, the utmost care is to be exerted in order to cause the semi-circular ribs 13 and 14 to be perfectly engaged into a groove of the external surface of said corrugated conduit sections 18 and 19.

In the fourth and last place, said cover sheath 15 is completely contained and closed and simultaneously said sleeve joint 10 is locked by coupling said half-shells 11 and 12 with one another and by actuating said closure mechanism by means of a slight pressure so as to mutually engage its tongues 16 and notches 17.

By this operation, junction of said conduit sections is achieved and a tight seal is contemporaneously maintained therebetween, also as a result of the resilient material type used to make said cover sheath 15.

According to a different embodiment, it is possible to modify the above described closure mechanism by providing suitable spring members in substitution for the above described engagement elements comprising tongues 16 and notches 17, so as to anyway guarantee a suitable clamping operation.

According to another embodiment, it is further provided that one of said half-shells is applied to the corrugated conduits as shown in Figure 1, while the other one can be slidably coupled thereto along their axis by means of a guide arrangement formed on its profile, until it is locked in its end position by means of suitably positioned closure mechanisms similar to the already described ones.

The preferred embodiments of this invention have been described and a number of variations have been suggested hereinbefore, but it should expressly be understood that those skilled in the art can make other variations and changes, without so departing from the scope thereof, as defined in the annexed claims.

## Claims

1. A self-locking sleeve joint adapted for single corrugated conduits (18, 19) comprising:
- a first and a second semi-cylindrical half-shells which, upon being coupled to one another, define a cylindrical room wherein the corrugated conduits (18, 19) to be joined are positioned, said half-shells having clamping means adapted to be perfectly engaged with the external corrugated surface of each corrugated conduit (18, 19), as well as an automatic clamping mechanism to lock together said half-shells by means of a snap action and simple manual operation, said clamping means for locking said half-shells (11, 12) on the conduits (18, 19) to be joined comprise locking, inwardly extending, semi-circular ribs (13, 14) having a trapezoidal cross-sectional shape, which are designed so as to be perfectly engaged into a groove of the corrugated external surface of each corrugated conduit (18, 19),
characterized in that a soft and resilient cover sheath (15) being placed at the junction seam between the ends of the conduits (18, 19) to be joined, said cover sheath (15) being completely contained and closed between said ribs (13,14), which are provided at the ends of said half-shells (11, 12) and in intermediate position between the external surface of said conduits and the internal surface of said half-shells (11, 12) so as to guarantee a tight seal as a result of the closure operation and said cover sheath (15) has at its central portion an inwardly extending circumferential ridge which is interposed between the facing ends of said conduits to be joined, thereby enabling the cover sheath to be centered with respect to the conduit ends in the junction area and enhancing the tight sealing characteristics of the joint.

2. A sleeve joint according to claim 1, characterized in that said automatic clamping mechanism for said half-shells (11, 12) comprises complementary toothed tongues (16) and toothed notches (17) alternatively provided along their longitudinal edges and mutually engageable by means of a snap action and a slight manually exerted pressure.

3. A sleeve joint according to claim 1, characterized in that said automatic locking mechanism comprises clamping spring members.

## Patentansprüche

1. Selbstverriegelnde Steckverbindung angebracht für einseitig gewellte Röhre (18,19), enthaltend:
- eine erste und eine zweite halbzylinderförmige Halbschale, die bei Kupplung miteinander einen zylindrischen Raum bilden, in welchem die zu verbindenden gewellten Röhre (18,19) angeordnet sind, wobei die vorgenannten Halbschalen Klemmitel aufweisen, die einwandfrei mit der gewellten Aussenfläche eines jeden gewelten Röhres (18,19) ankuppelbar sind, sowie eine selbstverriegelnde Einrichtung zum Verriegeln der vorgenannten Halbschalen miteinander vermittels einer Schnappwirkung und eines einfachen Handeingriffs, wobei die vorgenannten Klemmittel zur Verriegelung der vorgenannten Halbscalen (11,12) an den zu verbindenden Röhren (18,19) sich nach innen erstreckende halbrunde Spannrippen (13,14) aufweisen, die einen trapezförmigen einwandfrei in einer Nut der gewellten äusseren Oberfläche eines jeden gewellten Rohrs (18,19) eingreifbaren Querschnitt haben, dadurch gekennzeichnet, dass eine zähige Hülse (15) an der Kupplungsnaht zwischen den Enden der zu verbindenden Röhre (18,19) angeordnet ist, wobei die vorgenannte Verkleidungshülse (15) volkkommen durch die vorgenannten, an den Enden der Halbschalen (11,12) vorgesehenen Rippen (13) enthalten und eingeschlossen ist, und dass die vorgenannte Verkleidungshülse (15) an ihrem Mittelteil einen sich nach innen erstreckenden Vorsprung aufweist, der zwischen den gegenüberliegenden Enden der vorgenannten zu verbindenden Röhre vorgesehen ist, wodurch die vorgenannte Verkleidungshülse gegenüber den Röhrenden im Kupplungsbeireich zentriert werden kann und die Dichtungsmerkmale der Verbindung verbessert werden.

2. Steckverbindung nach Anspruch 1, dadurch gekennzeichnet, dass die vorgenannte selbstverriegelnde Einrichtung für die vorgenannten halbschalen (11,12) verzahnte Zungen (16) und verzahnte Nuten (17) aufweist, die alternativ an deren Längsrändern vorgesehen sind und miteinander durch eine Schnappwirkung und eine leichten Handdruck kuppelbar sind.

3. Steckverbindung nach Anspruch 1, dadurch gekennzeichnet, dass die vorgenannte selbstverriegelnde Einrichtung elastische Klemmitel enthält.

## Revendications

1. Joint à manchon autobloquant indiqué pour conduits ondulés à monoface (18,19) comprenant:
une premiere et une deuxième demi-coupe semi-cylindrique, qui forment, à leur union l'une à l'autre une chambre cylindrique, dans laquelle les conduits ondulés (18,19) sont placés, lesdites demi-coupes ayant des moyens de serrage aptes à être engagés parfaitement avec la surface extérieure ondulée de chacun conduit ondulé (18,19), ainsi que un mécanisme de serrage automatique pour bloquer l'une à l'autre lesdites demi-coupes au moyen d'une action à déclanchement par une simple opération manuelle, lesdits moyens de serrage pour bloquer lesdites demi-coupes (11,12) sur les conduits (18,19) à joindre comprendent de bourrelets semi-circulaires de serrage (13,14), qui s'éntendent vers l'intérieur et ont une section transversale de forme trapézoïdale, qui s'egage parfaitement dans une gorge de la surface extérieur ondulée de chacun conduit ondulé (18,19), caractérisé en ce que une gaine souple et résiliente (15) est placée sur la jointure entre les extremités des conduits (18,19) à joindre, ladite gaine de couverture (15) étant complètement contenue et fermée entre lesdits bourrelets (13,14), qui sont prevus à les extrémités desdites demi-coupes (11,12) et ladite gaine de couverture (15) à sa portion central a une saillie périmétrale, qui est interposée entre les extrémités placées, face à face l'une avec l'autre, desdits conduits à joindre entre eux, en cette façon étant possible de centrer la gaine de couverture par rapport à les extrémités des conduits dans l'aire de jointure et de améliorer les caractéristiques d'étanchéité.

2. Joint à manchon selon la revendication 1, caractérisé en ce que ledit mécanisme de serrage automatique pour lesdites demi-coupes (11,12) comprend des languettes dentées (16) et des entailles (17) complémentaires, prevues alternativement sur les rebords longitudinals et aptes à être engagées au moyen d'une action à déclanchement par une léger pression manuelle.

3. Joint à manchon selon la revendication 1, caractérisé en ce que ledit mécanisme de serrage automatique comprend des moyens de serrage à ressort.
